# EUROPEAN PATENT APPLICATION

(11) **EP 2 865 800 A1**
(43) Date of publication of application: **29.04.2015**
(21) Application number: 13190074.8
(22) Date of filing: 24.10.2013
(51) Int. Cl.: D06F 37/26, B29C 65/06, B29C 65/08, B29C 65/78

(54) **Assembly method and assembly apparatus of the washing tub of a laundry washing machine**

(71) Applicant: Electrolux Appliances Aktiebolag, 105 45 Stockholm (SE)
(72) Inventor: Perosa, Vittorio, 33080 Porcia (PN) (IT)
(74) Representative: Frare, Paolo

(57) **Abstract**

The present invention is related to an assembly method of the washing tub (1) of a laundry washing machine (100) wherein the washing tub (1) comprises a first hemi-shell-shaped section (4) and a second hemi-shell-shaped section (5) which are made of plastic material and are coupled to one another in watertight manner along conjugated coupling rims (4a, 5a); the assembly method of the washing tub (1) comprising the steps of: - placing the first hemi-shell-shaped section (4) in a first supporting template (11), inside a corresponding receiving seat (11a) structured for receiving the first hemi-shell-shaped section (4) with the corresponding coupling rim (4a) faced to the outside of the same first supporting template (11); - placing the second hemi-shell-shaped section (5) in a second supporting template (12), inside a corresponding receiving seat (12a) structured for receiving the second hemi-shell-shaped section (5) with the corresponding coupling rim (5a) faced to the outside of the same second supporting template (12); - arranging the first (11) and second supporting templates (12) so as to put the conjugated coupling rims (4a, 5a) of the first (4) and second hemi-shell-shaped sections (5) in abutment to one another and keeping them locally substantially coplanar to a common reference laying plane (P); - vibrating for a given time the second supporting template (12) with respect to the first supporting template (11) parallel to said common reference laying plane (P), so as to merge the second hemi-shell-shaped section (5) to the first hemi-shell-shaped section (4) via a vibration welding process. The step of placing the second hemi-shell-shaped section (5) inside the receiving seat (12a) of the second supporting template (12) comprises inserting a number of outwards-projecting protrusions (13) that stick out from the second supporting template (12), in pass-through manner across corresponding hold portions of the second hemi-shell-shaped section (5).

## Description

The present invention relates to an assembly method and assembly apparatus of the washing tub of a laundry washing machine.

More in particular, the present invention relates to the assembly method and assembly apparatus of the washing tub of a front-loading or top-loading laundry washing machine or of a front-loading or top-loading laundry washing and drying machine,.

As is known, a front-loading home laundry washing machine generally comprises: a substantially parallelepiped-shaped, outer boxlike casing structured for resting on the floor; a substantially bell-shaped washing tub which is usually suspended in floating manner inside the casing, directly facing a laundry loading/ unloading through opening realized in the front wall of the casing; a substantially cylindrical, bell-shaped rotatable drum structured for housing the laundry to be washed, and which is fitted in axially rotatable manner inside the washing tub with its concavity facing the laundry loading/unloading opening, so as to be able to freely rotate about its substantially horizontally-oriented longitudinal axis inside the washing tub; a substantially cylindrical elastically-deformable bellows, which connects the front mouth of the washing tub to the laundry loading/unloading opening formed in the front wall of the casing; a porthole door which is hinged to the front wall of the casing to rotate to and from a closing position in which the door closes the laundry loading/unloading opening in the front wall of the casing for watertight sealing the washing tub; and finally an electrically-powered motor assembly which is structured for driving into rotation the rotatable drum about its longitudinal axis inside the washing tub.

In today's laundry washing machines, the rotatable drum is generally made of stainless steel, whereas the washing tub is generally made of plastic material and is formed by two or more complementary hemi-shells coupled to one another in watertight manner.

More specifically, the washing tub is generally formed by a substantially cup-shaped rear hemi-shell and by a substantially funnel-shaped front hemi-shell that are welded to one another without interruption all along the perimetrical edge.

In particular, with reference to EP2013399B1, the assembly method of this type of washing tubs involves to firstly align the front and the rear hemi-shells of the washing tub to the rotatable drum, on opposite sides of the latter, so that the front mouth of the rotatable drum faces the funnel-shaped front hemi-shell of the washing tub, and the bottom of the rotatable drum faces the cup-shaped rear hemi-shell of the washing tub.

Then the assembly method of the washing tub involves to put the larger annular rim of the funnel-shaped front hemi-shell of the washing tub in abutment against the perimetrical annular rim of the cup-shaped rear hemi-shell of the washing tub, so as to enclose the rotatable drum between the front and the rear hemi-shells of the washing tub; and to weld the larger annular rim of the funnel-shaped front hemi-shell of the washing tub to the perimetrical annular rim of the cup-shaped rear hemi-shell of the washing tub via a vibration welding process, so as to permanently watertight seal the front hemi-shell of the washing tub to the rear hemi-shell of the washing tub.

More in details, the perimetrical annular rim of the cup-shaped rear hemi-shell of the washing tub is provided with a front annular grove having a substantially U-shaped cross section, and the larger annular rim of the funnel-shaped front hemi-shell of the washing tub is suitably dimensioned to engage/fit into said front annular groove wherein to melt and merge with the body of the rear hemi-shell during the vibration welding process.

The welding machine that performs the vibration welding process, in turn, basically comprises a stationary template which has a receiving seat structured for receiving the cup-shaped rear hemi-shell of the washing tub; and a vibrating template which has a receiving seat structured for receiving the funnel-shaped front hemi-shell of the washing tub, and is capable of quickly vibrating with respect to the stationary template, when the larger annular rim of the funnel-shaped front hemi-shell abuts against the perimetrical annular rim of the cup-shaped rear hemi-shell, so as to merge the front hemi-shell of the washing tub to the rear hemi-shell of the washing tub.

To ensure, during the vibration welding process, both uniform pressing of the larger annular rim of the funnel-shaped front hemi-shell against the body of the cup-shaped rear hemi-shell, and proper transmission of the mechanical vibrations from the vibrating template of the welding machine to the larger annular rim of the funnel-shaped front hemi-shell, the funnel-shaped front hemi-shell of the washing tub is furthermore provided, all around its larger annular rim, with a substantially L-shaped, outwards-projecting annular flange which is suitably shaped to be engaged by a corresponding raised annular rib of the vibrating template of the welding machine.

Unluckily in some cases the L-shaped annular flange that surrounds the larger annular rim of the front hemi-shell of the washing tub may be difficult or even impossible to form, due to the particular shape of the hemi-shell that has to be obtained; this fact reduces the freedom in the design of this hemi-shell.

Aim of the present invention is therefore to provide an assembly method and assembly apparatus of the washing tub of laundry washing machine, which allows having a high freedom in the design of the hemi-shells of a washing tub.

In compliance with the above aims, according to the present invention there is provided an assembly method of the washing tub of a laundry washing machine wherein the washing tub comprises a first hemi-shell-shaped section and a second hemi-shell-shaped section which are made of plastic material and are coupled to one another in watertight manner along conjugated coupling rims; the assembly method of the washing tub comprising the steps of:
- placing the first hemi-shell-shaped section in a first supporting template, inside a corresponding receiving seat structured for receiving the first hemi-shell-shaped section with the corresponding coupling rim faced to the outside of the same first supporting template;

- placing the second hemi-shell-shaped section in a second supporting template, inside a corresponding receiving seat structured for receiving the second hemi-shell-shaped section with the corresponding coupling rim faced to the outside of the same second supporting template;
- arranging the first and second supporting templates so as to put the conjugated coupling rims of the first and second hemi-shell-shaped sections in abutment to one another and keeping them locally substantially coplanar to a common reference laying plane;
- vibrating for a given time the second supporting template with respect to the first supporting template parallel to said common reference laying plane, so as to merge the second hemi-shell-shaped section to the first hemi-shell-shaped section via a vibration welding process;
wherein the step of placing the second hemi-shell-shaped section inside the receiving seat of the second supporting template, comprises inserting a number of outwards-projecting protrusions that stick out from the second supporting template, in pass-through manner across corresponding hold portions of the second hemi-shell-shaped section.

Preferably, the outward-projecting protrusions are arranged in such a way that they are locally substantially perpendicular to the common reference laying plane when the first and second supporting templates are positioned in such a way that the conjugated coupling rims of the first and second hemi-shell-shaped sections are in abutment to one another.

Preferably, though not necessarily, the hold portions of the second hemi-shell-shaped section comprise a number of outwards-projecting winglets that jut out from the second hemi-shell-shaped section adjacent to and angularly spaced around the conjugated coupling rim of the second hemi-shell-shaped section, or a flange that stick out from the second hemi-shell-shaped section adjacent to the conjugated coupling rim of the second hemi-shell-shaped section.

Preferably, though not necessarily, the outwards-projecting protrusions of the second supporting template engage in pass-through manner corresponding centring through holes realized on the hold portions of the second hemi-shell-shaped section.

Preferably, though not necessarily, the assembly method is furthermore **characterized in that** the protrusions of the second supporting template comprise a number of outwards-protruding pins that stick out from the main body of the second supporting template; preferably, the pins are arranged in such a way that they are locally substantially perpendicular to the common reference laying plane when the first and second supporting templates are positioned in such a way that the conjugated coupling rims of the first and second hemi-shell-shaped sections are in abutment to one another.

Preferably, though not necessarily, the assembly method is furthermore characterized by comprising, before the step of arranging the first and the second hemi-shell-shaped sections of the washing tub in abutment to one another, the step of inserting a rotatable drum of the laundry washing machine into the first hemi-shell-shaped section of the washing tub.

Preferably, though not necessarily, the conjugated coupling rim of the first hemi-shell-shaped section is provided with a front annular grove, and the conjugated annular coupling rim of the second hemi-shell-shaped section is suitably structured and dimensioned to engage/fit into said annular groove.

Preferably, though not necessarily, the first hemi-shell-shaped section is substantially cup-shaped and in that the second hemi-shell-shaped sections is substantially funnel- shaped or cup-shaped.

Preferably, though not necessarily, the first hemi-shell-shaped sections is substantially cup-shaped and in that the second hemi-shell-shaped sections is substantially funnel- shaped, so as to form, when coupled to one another, a substantially cylindrical and bell-shaped rigid watertight container.

Preferably, though not necessarily, both first and second hemi-shell-shaped sections are substantially cup-shaped, so as to form, when coupled to one another, a substantially cylindrical and barrel-shaped rigid watertight container.

The combination of the hold portions (preferably comprising outwards-projecting winglet) on the second hemi-shell-shaped section of the washing tub and of the protrusions that stick out from the second supporting template for engaging in pass-though manner said hold portions , allows a significantly improved transmission of the (preferably ultrasound) mechanical vibrations from the second supporting template to the body of the second hemi-shell-shaped section of the washing tub, which guarantees obtaining an effective and uniform welding of the hemi-shells.

Moreover, according to the present invention there is provided an assembly apparatus of the washing tub of a laundry washing machine wherein the washing tub comprises a first hemi-shell-shaped section and a second hemi-shell-shaped section which are made of plastic material and are coupled to one another in watertight manner along conjugated coupling rims; the assembly apparatus comprising:
- a first supporting template having a receiving seat structured for receiving the first hemi-shell-shaped section of the washing tub with the corresponding coupling rim faced to the outside of the first supporting template;
- a second supporting template having a receiving seat structured for receiving the second hemi-shell-shaped section of the washing tub with the corresponding coupling rim faced to the outside of the second supporting template;
- a template moving device capable of moving the first and second supporting templates one towards and backwards the other, so as to put the conjugated coupling rims of the first and second hemi-shell-shaped sections in abutment to one another, while arranging said conjugated coupling rims locally substantially coplanar to a common reference laying plane;
the first and second supporting templates being arrangeable so as to put the conjugated coupling rims of the first and second hemi-shell-shaped sections in abutment to one another, while arranging said conjugated coupling rims locally substantially coplanar to a common reference laying plane; the second supporting template being capable of vibrating with respect to the first supporting template parallel to said common reference laying plane; the second supporting template is provided with a number of outwards-projecting protrusions that stick out from the second supporting template, and are suitably spaced all around the mouth of the receiving seat of the second supporting template so that each protrusion is capable of engaging in pass-through manner a corresponding hold portion of the second hemi-shell-shaped section of the washing tub.

Preferably, the outward-projecting protrusions are arranged in such a way that they are locally substantially perpendicular to the common reference laying plane when the first and second supporting templates are positioned in such a way that the conjugated coupling rims of the first and second hemi-shell-shaped sections are in abutment to one another.

Preferably, though not necessarily, the assembly apparatus is furthermore **characterized in that** the outwards-projecting protrusions of the second supporting template comprise a number of outwards-protruding pins that stick out from the main body of the second supporting template.

Preferably, the pins are arranged in such a way that they are locally substantially perpendicular to the common reference laying plane when the first and second supporting templates are positioned in such a way that the conjugated coupling rims of the first and second hemi-shell-shaped sections are in abutment to one another.

Preferably, though not necessarily, the assembly apparatus is furthermore characterized by also comprising a template moving device which is capable of moving the first and second supporting templates one towards and backwards the other, so as to put the conjugated coupling rims of the first and second hemi-shell-shaped sections in abutment to one another, arranging said conjugated coupling rims locally substantially coplanar to said common reference laying plane.

Lastly, according to the present invention there is provided a washing machine comprising am outer casing containing a washing tub which comprises a first hemi-shell-shaped section and a second hemi-shell-shaped section which are made of plastic material and are coupled to one another in watertight manner along conjugated coupling rims; the washing tub being **characterized in that** the second hemi-shell-shaped section is provided with one or more hold portions structured so as to be engageable in pass-through manner, during assembly of the washing tub, by corresponding outwards-projecting protrusions that stick out from the a supporting template of the assembly apparatus that merges the first and second hemi-shell-shaped sections of the washing tub via a vibration welding process.

Preferably, though not necessarily, the one or more hold portions of the second hemi-shell-shaped section comprise a number of outwards-projecting winglets that jut out from the second hemi-shell-shaped section adjacent to and angularly spaced around the conjugated coupling rim of the second hemi-shell-shaped section, or a flange that stick out from the second hemi-shell-shaped section adjacent to the conjugated coupling rim of the second hemi-shell-shaped section.

Preferably, though not necessarily, the outwards-projecting winglets or the flange extend/s locally substantially parallel to the reference laying plane of the conjugated coupling rim of the second first hemi-shell-shaped section.

Preferably, though not necessarily, the one or more hold portions of the second hemi-shell-shaped section is/are provided with one or more centring through holes extending locally substantially perpendicular to the reference laying plane of the conjugated annular coupling rim of the second first hemi-shell-shaped section.

Preferably, though not necessarily, one or more of the hold portions of the second hemi-shell-shaped section of the washing tub serve/s as fixing bracket/s for a coil spring connecting the upper portion of the washing tub to the outer casing of the laundry washing machine, and/or for a damper connecting the bottom portion of the washing tub to the outer casing of the laundry washing machine.

A non-limiting embodiment of the present invention will now be described, by way of example, with reference to the accompanying drawings, in which:
- Figure 1 shows a partly exploded, perspective view of the washing tub of a front-loading laundry washing machine realized in accordance with the teachings of the present invention;
- Figure 2 is a side view, with parts in section and parts removed for clarity, of a front-loading laundry washing machine provided with the Figure 1 washing tub; whereas
- Figures from 3 to 10 schematically show different steps of the assembly process of the Figure 1 washing tub.

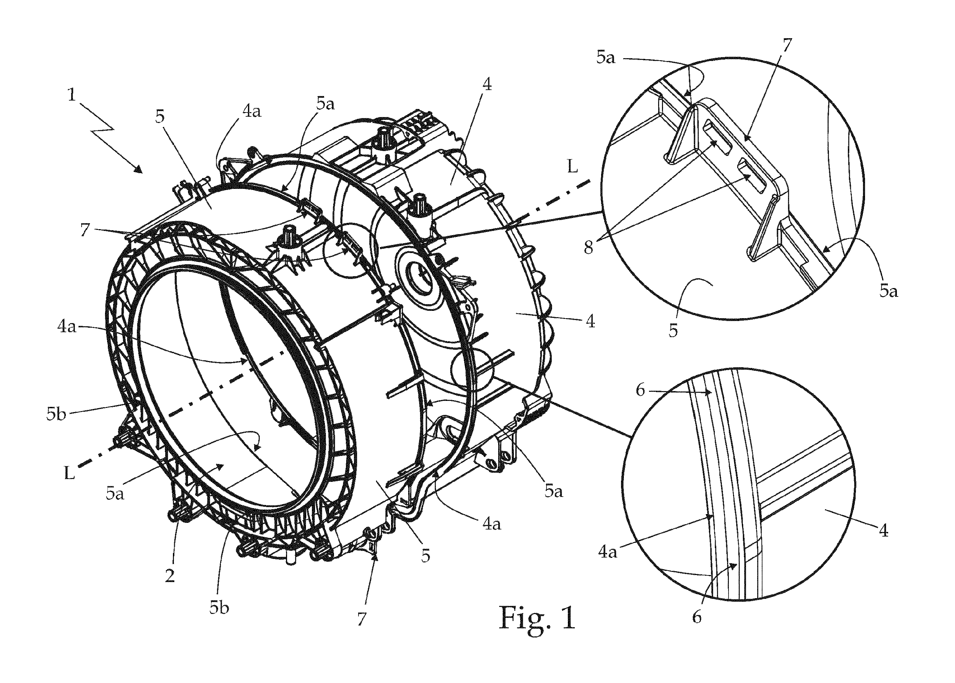

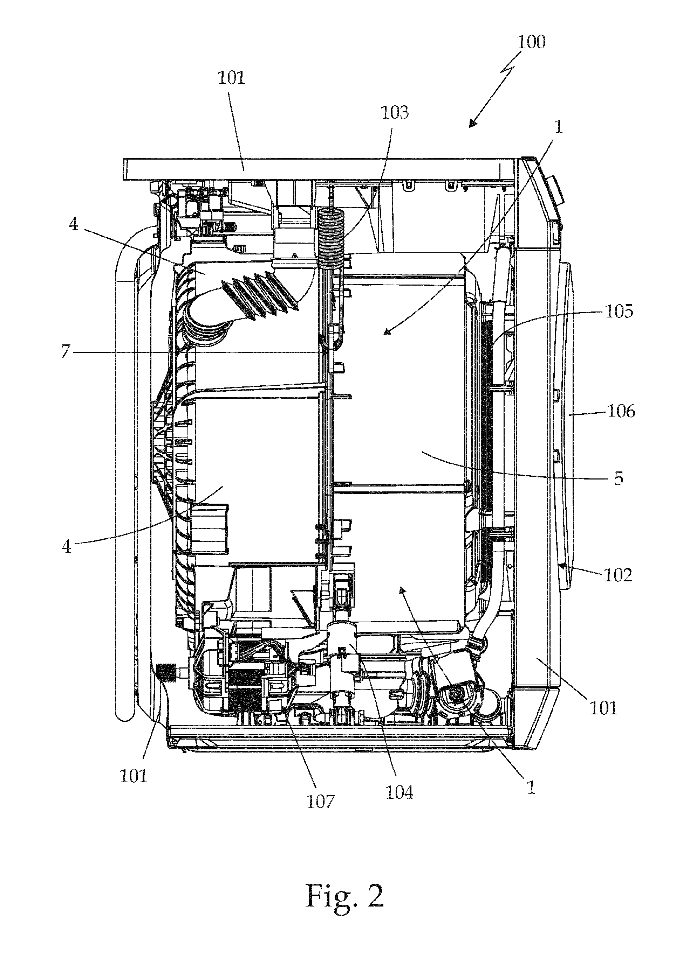

With reference to Figure 1 and 2, reference number 1 indicates as a whole a substantially cylindrical, inner washing tub of a laundry washing machine or of a laundry washing and drying machine. The washing tub 1 is therefore specifically structured for being housed inside the outer boxlike casing of the laundry washing machine, and for internally housing the substantially cylindrical, axially-rotatable drum of the laundry washing machine.

In the example shown, in particular, the washing tub 1 is preferably structured for being housed inside the outer boxlike casing of a front-loading laundry washing machine 100.

In other words, the front-loading laundry washing machine 100 is provided with a preferably substantially parallelepiped-shaped, outer boxlike casing 101 which is structured for resting on the floor, and the washing tub 1 is preferably substantially cylindrical and bell-shaped, and is arranged inside the outer casing 101 with its circular front opening or mouth 2 directly facing a laundry loading/unloading through opening realized in a front wall 102 of the same casing 101. The laundry washing machine 100 is furthermore provided with a substantially cylindrical, bell-shaped rotatable drum (not shown) which is structured for receiving/housing the laundry to be washed, and which is fitted in axially rotatable manner inside the washing tub 1 with its concavity facing the laundry loading/unloading opening of front wall 102, so as to be able to freely rotate inside the washing tub 1 about its longitudinal reference axis.

More in detail, the rotatable drum (not shown) of laundry washing machine 100 is preferably arranged inside washing tub 1 with the drum rotation axis locally substantially coaxial to the longitudinal axis L of washing tub 1, and with the circular front opening or mouth of the rotatable drum directly aligned and faced to the circular front opening or mouth 2 of the washing tub 1, so as to receive the laundry to be washed through the laundry loading/unloading opening realized on front wall 102.

In the example shown washing tub 1 is preferably arranged inside the outer casing 101 with its longitudinal axis L substantially horizontally-oriented, i.e. substantially perpendicular to front wall 102. Anyway horizontal axis L can also be inclined. Furthermore washing tub 1 is preferably suspended in floating manner inside the outer casing 101 via a suspension system that preferably, though not necessarily, comprises one or more upper coil springs 103 connecting the upper portion of the washing tub 1 to the top of casing 101, and preferably a number of vibration dampers 104 connecting the bottom portion of the washing tub 1 to the bottom of casing 101.

With reference to Figure 2, the laundry washing machine 100 furthermore preferably comprises: a substantially cylindrical elastically-deformable bellows 105, which connects the front mouth 2 of washing tub 1 to the laundry loading/unloading opening realized in the front wall 102 of casing 101; a porthole door 106 which is hinged to front wall 102 so as to be able to rotate to and from a closing position in which the door 106 closes the laundry loading/unloading opening on front wall 102 for watertight sealing the washing tub 1; an electrically-powered motor assembly 107 which is structured for driving into rotation the rotatable drum about its longitudinal axis inside the washing tub 1.

With reference to Figure 1, washing tub 1 is furthermore made of plastic material, and comprises a rear hemi-shell-shaped section 4 and a front hemi-shell-shaped section 5 which are welded to one another, preferably without interruptions, via a vibration welding process, so as to be permanently coupled to one another in watertight manner to form a substantially bell-shaped, rigid watertight container that preferably encloses the rotatable drum (not shown) of the laundry washing machine 100.

In other words, the rear hemi-shell-shaped section 4 and the front hemi-shell-shaped section 5 are aligned to one another, i.e. coaxial to longitudinal axis L, with the respective concavities reciprocally faced, and preferably with the rotatable drum (not shown) of laundry washing machine 100 entrapped in between themselves, and are welded to one another preferably without interruption along corresponding conjugated annular coupling rims 4a and 5a that preferably extend on a reference laying plane locally substantially perpendicular to the washing-tub longitudinal axis L, so as to form a substantially cylindrical, bell-shaped, rigid watertight container which preferably encloses the rotatable drum (not shown) of the laundry washing machine 100.

More in detail, the annular coupling rim 4a of the rear hemi-shell-shaped section 4 is preferably provided with a front annular groove 6 preferably having a substantially U-shaped cross section, and the corresponding conjugated annular coupling rim 5a of the front hemi-shell-shaped section 5 is suitably structured and dimensioned to engage/fit into the annular groove 6 wherein to melt and merge with the body of the rear section 4 during the vibration welding process.

With reference to Figure 1, in the example shown, in particular, the rear hemi-shell-shaped section 4 is preferably substantially cylindrical- and cup-shaped, and the corresponding annular coupling rim 4a preferably is the outer perimetrical annular rim 4a of the substantially cup-shaped, rear section 4; whereas the front hemi-shell-shaped section 5 is preferably substantially cylindrical- and funnel-shaped, and the corresponding annular coupling rim 5a preferably is the larger annular rim 5a of the substantially funnel-shaped, front section 5.

In other words, the outer perimetrical annular rim 4a of the substantially cup-shaped, rear section 4 abuts to, and is welded preferably without interruption to, the larger annular rim 5a of the substantially funnel-shaped, front section 5, so as to form a substantially cylindrical and bell-shaped, rigid watertight container which preferably encloses the rotatable drum (not shown) of the laundry washing machine.

In a preferred embodiment, the perimetrical annular rim 4a of the substantially cup-shaped, rear section 4 is preferably provided with a front annular grove 6 preferably having a substantially U-shaped cross section, and the larger annular rim 5a of the substantially funnel-shaped, front section 5 is suitably structured and dimensioned to engage/fit into the annular groove 6 wherein to melt and merge with the body of the rear section 4 during the vibration welding process.

The smaller annular rim 5b of the substantially funnel-shaped, front section 5, instead, delimits the circular front opening or mouth 2 of the washing tub 1.

With reference to Figure 1, the front hemi-shell-shaped section 5 of washing tub 1 furthermore advantageously comprises a series of preferably substantially flat, outwards-projecting winglets 7 that advantageously jut out from the main body of the front hemi-shell-shaped section 5 adjacent to the annular coupling rim 5a (i.e. adjacent to the larger annular rim 5a of the substantially funnel-shaped, front section 5), and are suitably angularly spaced all around the same annular coupling rim 5a.

The outwards-projecting winglets 7 of the front hemi-shell-shaped section 5 of washing tub 1 are therefore suitably angularly spaced about the longitudinal axis L of washing tub 1.

Furthermore all outwards-projecting winglet 7 preferably extend locally substantially parallel to the reference laying plane of the annular coupling rim 5a of the front hemi-shell-shaped section 5 (i.e. to the reference laying plane of the larger annular rim 5a of the substantially funnel-shaped, front section 5), and are each preferably provided with one or more centring through holes 8 extending locally substantially perpendicular to the reference laying plane of the annular coupling rim 5a, i.e. substantially parallel to the longitudinal axis L of washing tub 1.

In the example shown, the centring through holes 8 on the outwards-projecting winglets 7 preferably have a substantially rectangular cross-section.

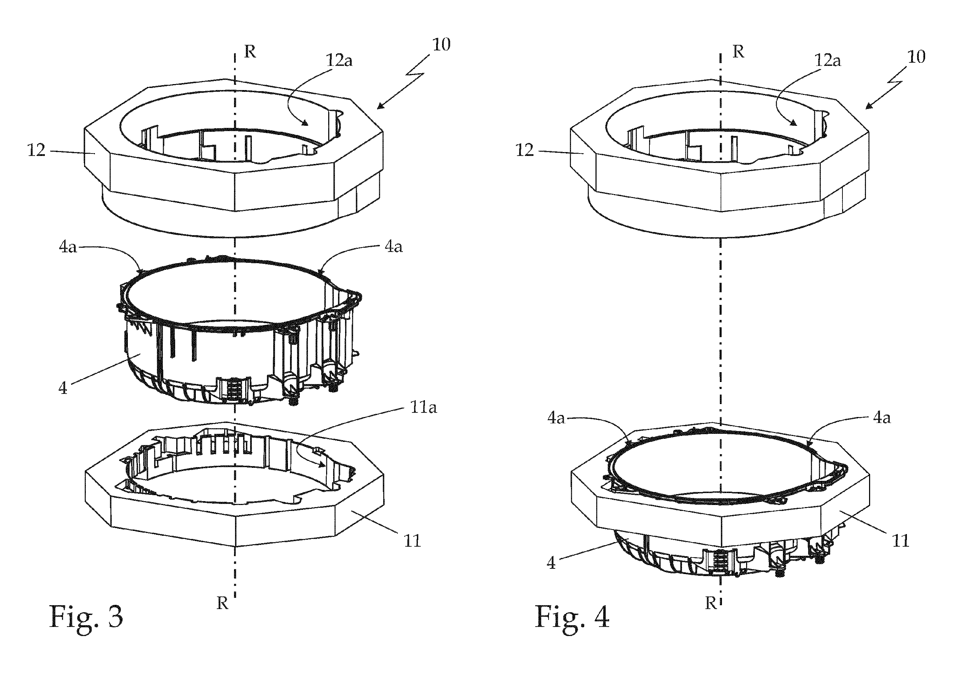

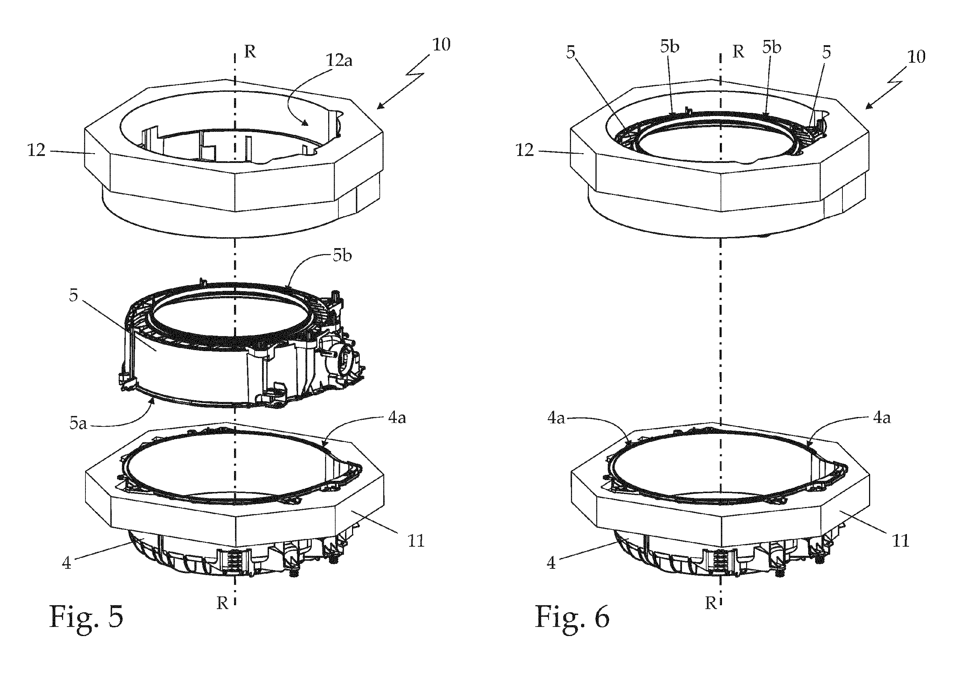

With reference to Figure 3-10, the assembly apparatus 10 (only schematically illustrated in attached Figures) capable of welding the front and rear hemi-shell-shaped sections 4 and 5 of washing tub 1 to one another instead basically comprises two, preferably substantially annular-shaped, supporting templates 11 and 12, one structured for stationary receiving the rear hemi-shell-shaped section 4 of washing tub 1 with the annular coupling rim 4a leaning out of the same supporting template 11 and the other structured for stationary receiving the front hemi-shell-shaped section 5 of washing tub 1 with the annular coupling rim 5a leaning out of the same supporting template 12; and a template moving device (not shown) which is capable of moving and pressing, on command, the supporting templates 11 and 12 one towards and backwards the other, so as to selectively put the conjugated coupling rims 4a and 5a of front and rear hemi-shell-shaped sections 4 and 5 in abutment to one another and at same time locally substantially coplanar to a common reference laying plane P.

The outwards-projecting winglets 7 of front hemi-shell-shaped section 5 are therefore preferably arranged locally substantially parallel to the common reference laying plane P when the conjugated coupling rims 4a and 5a are in abutment to one another.

More in detail, the first supporting template 11 is provided with a receiving seat 11a which is structured for stationary receiving the rear hemi-shell-shaped section 4 of washing tub 1 with the annular coupling rim 4a leaning out of the same supporting template 11; whereas the second supporting template 12 is provided with a receiving seat 12a structured for stationary receiving the front hemi-shell-shaped section 5 of washing tub 1 with the annular coupling rim 5a leaning out of the same supporting template 12.

Furthermore, receiving seat 11a of first supporting template 11 is shaped/ structured so as to arrange the annular coupling rim 4a of the rear hemi-shell-shaped section 4 of washing tub 1 substantially coplanar to a first reference laying plane which is preferably locally substantially perpendicular to the longitudinal reference axis of the first supporting template 11.

Receiving seat 12a of second supporting template 12, in turn, is shaped/structured so as to arrange the annular coupling rim 5a of the front hemi-shell-shaped section 5 of washing tub 1 substantially coplanar to a second reference laying plane which is preferably locally substantially perpendicular to the longitudinal reference axis of the second supporting template 12. The outwards-projecting winglets 7 of the front hemi-shell-shaped section 5 of washing tub 1 are therefore preferably arranged locally substantially parallel to the second reference laying plane when the front hemi-shell-shaped section 5 is fitted into the receiving seat 12a of second supporting template 12.

With reference to Figure 3-10, in the example shown supporting templates 11 and 12 are preferably aligned along a common reference axis R, and the common reference laying plane P is locally substantially perpendicular to said common reference axis R.

Thus the receiving seat 11a of supporting template 11 is structured for stationary receiving the rear hemi-shell-shaped section 4 of washing tub 1 with the annular coupling rim 4a leaning out of the same supporting template 11 towards the second supporting template 12, preferably while remaining moreover substantially coplanar to a first reference laying plane which is locally substantially perpendicular to the common reference axis R, i.e. substantially parallel to the common reference laying plane P.

The receiving seat 12a of supporting template 12 instead is structured for stationary receiving the front hemi-shell-shaped section 5 of washing tub 1 with the annular coupling rim 5a leaning out of the same supporting template 12 preferably towards the first supporting template 11, preferably while remaining moreover substantially coplanar to a second reference laying plane which is locally substantially perpendicular to the common reference axis R, i.e. substantially parallel to the common reference laying plane P.

The templates moving device of the assembly apparatus 10, in turn, is structured to move, on command, the supporting templates 11 and 12 one towards and backwards the other, so as to selectively put the annular coupling rim 5a of the front hemi-shell-shaped section 5 in abutment against the conjugated annular coupling rim 4a of the rear hemi-shell-shaped section 4 of washing tub 1, while arranging the conjugated coupling rims 4a and 5a locally substantially coplanar to a common reference laying plane P which is locally substantially perpendicular to the common reference axis R of supporting templates 11 and 12.

More in detail, the moving device of assembly apparatus 10 is preferably structured so as to be able to move, on command, the supporting template 12 towards and backwards the supporting template 11 in a displacement direction parallel to the common reference axis R, while keeping supporting template 12 locally aligned/ coaxial to supporting template 11.

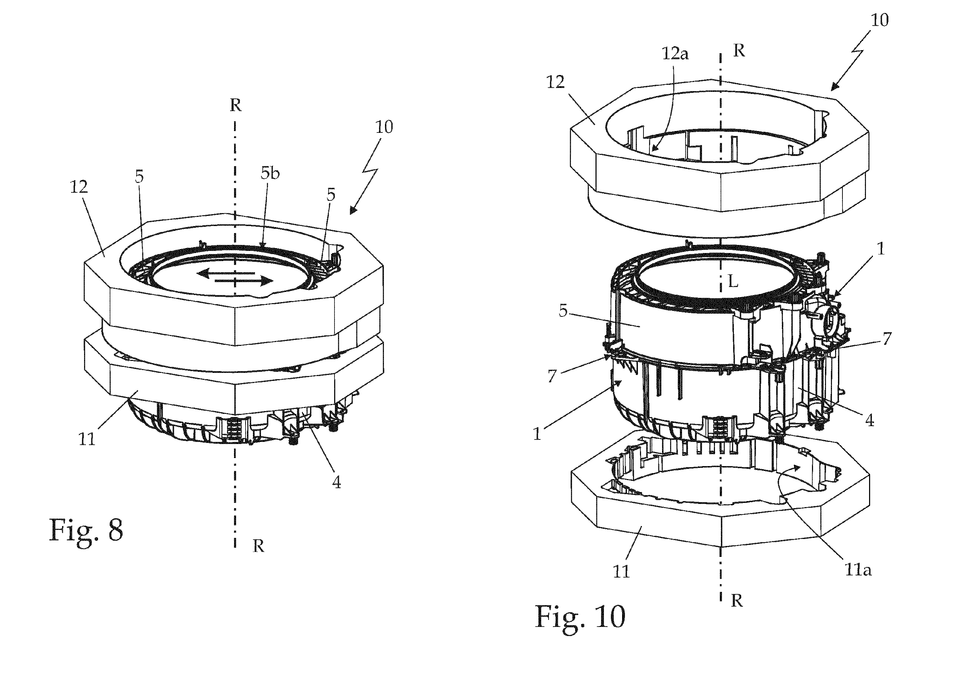

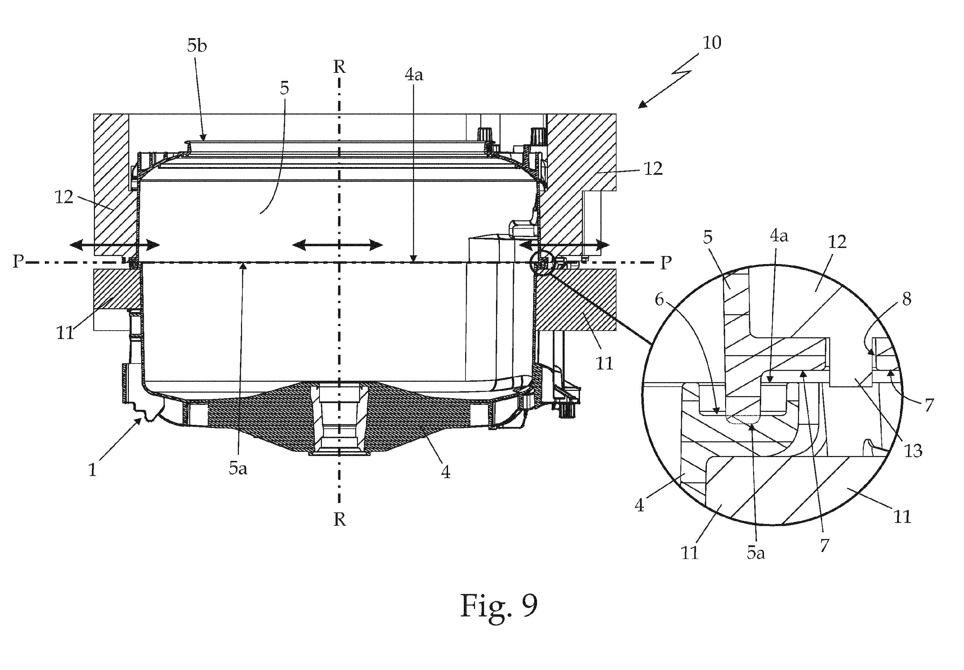

Finally, with reference to Figures 8 and 9, the second supporting template 12 of assembly apparatus 10, when the annular coupling rim 5a of front section 5 abuts against the conjugated annular coupling rim 4a of rear section 4, is capable of pressing and quickly vibrating with respect to the first supporting template 11 in a direction parallel to the common reference laying plane P of the conjugated coupling rims 4a and 5a, hereinafter also called vibration plane P of supporting template 12, so as to merge the front hemi-shell-shaped section 5 of washing tub 1 to the rear hemi-shell-shaped section 4 of washing tub 1 via a vibration welding process.

In the example shown, in particular, the second supporting template 12 is preferably structured to vibrate parallel to the common reference laying plane P.

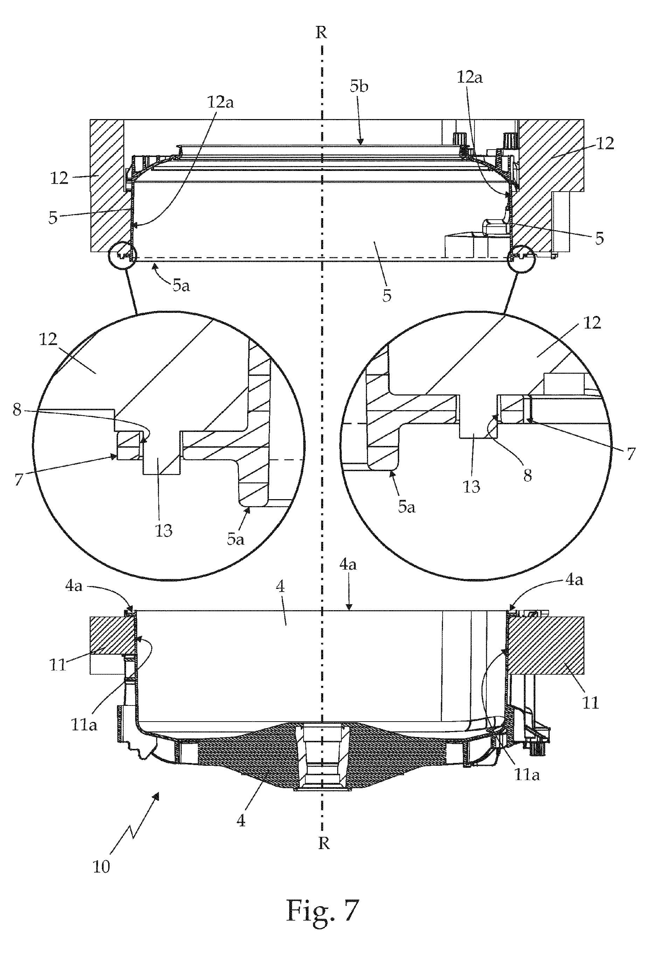

With reference to Figures 7 and 9, in the example shown the supporting template 12 of assembly apparatus 10 is preferably structured to abut against the outwards-projecting winglets 7 of the front hemi-shell-shaped section 5 when the latter is fitted into the receiving seat 12a of supporting template 12.

In addition to the above, the supporting template 12 of assembly apparatus 10 is moreover provided with a number of outwards-projecting protrusions 13 that stick out from the main body of supporting template 12 while remaining locally substantially parallel to the longitudinal reference axis of supporting template 12, i.e. locally substantially parallel to the common reference axis R, so as to be oriented locally substantially perpendicular to the reference laying plane of the annular coupling rim 5a of the front hemi-shell-shaped section 5 when the latter is fitted into the receiving seat 12a of supporting template 12.

In other words, the outwards-projecting protrusions 13 stick out from the main body of supporting template 12 so as to be arranged locally substantially perpendicular to vibration plane P of supporting template 12 when the conjugated coupling rims 4a and 5a of front and rear sections 4 and 5 are arranged in abutment to one another.

These outwards-projecting protrusions 13 are furthermore suitably spaced all around the mouth of the receiving seat 12a of supporting template 12 so that each protrusion 13 is capable of engaging in pass-through manner a centring through hole 8 of a corresponding outwards-projecting winglet 7 of the front hemi-shell-shaped section 5 of washing tub 1.

In the example shown the supporting template 12 of assembly apparatus 10 is preferably provided with a number of outwards-projecting pins 13 that stick out from the main body of supporting template 12 while remaining locally substantially parallel to the longitudinal reference axis of supporting template 12, i.e. locally substantially parallel to the common reference axis R, so as to be oriented locally substantially perpendicular to the reference laying plane of the annular coupling rim 5a of the front hemi-shell-shaped section 5 when the latter is fitted into the receiving seat 12a of supporting template 12.

These outwards-projecting pins 13 are furthermore suitably spaced all around the mouth of the receiving seat 12a of supporting template 12 so that each pin 13 is capable of engaging in pass-through manner a centring through hole 8 of a corresponding outwards-projecting winglet 7 of the front hemi-shell-shaped section 5 of washing tub 1.

With reference to Figure 3-10, advantageously the assembly method of washing tub 1 comprises the step of placing the rear hemi-shell-shaped section 4 of washing tub 1 into the receiving seat 11a of the first supporting template 11, so as to immobilize the rear section 4 inside the first supporting template 11 with the annular coupling rim 4a faced to the outside of supporting template 11 and preferably also substantially coplanar to a first reference laying plane that becomes substantially parallel to the vibration plane P of supporting template 12 when the first supporting template 11 is aligned and faced to the second supporting template 12; and preferably also the step of inserting the rotatable drum (not shown) of the laundry washing machine 100 into the rear hemi-shell-shaped section 4 of washing tub 1, so that the rotatable drum (not shown) is preferably substantially coaxial to the rear hemi-shell-shaped section 4 and so that the bottom of the rotatable drum preferably directly faces the bottom of the rear hemi-shell-shaped section 4.

After placing the rear hemi-shell-shaped section 4 of washing tub 1 into the receiving seat 11a of the first supporting template 11 and optionally also after inserting the rotatable drum (not shown) of the laundry washing machine 100 into the rear hemi-shell-shaped section 4 of washing tub 1, the assembly method of washing tub 1 comprises the step of placing the front hemi-shell-shaped section 5 of washing tub 1 into the receiving seat 12a of the second supporting template 12, so as to immobilize the front hemi-shell-shaped section 5 inside the second supporting template 12 with the corresponding annular coupling rim 5a faced to the outside of supporting template 12 and preferably also substantially coplanar to a second reference laying plane that becomes substantially parallel to the vibration plane P of supporting template 12 when the second supporting template 12 is aligned to the first supporting template 11.

During the placing of the front hemi-shell-shaped section 5 of washing tub 1 into the receiving seat 12a of supporting template 12, the assembly method of washing tub 1 preferably involves to put the various outwards-projecting winglets 7 of the front hemi-shell-shaped section 5 in abutment against the body of the supporting template 12, preferably while keeping the winglets 7 locally substantially parallel to the vibration plane P of supporting template 12; and to insert/engage in pass-through manner the various outwards-projecting protrusions 13 of the second supporting template 12, i.e. the outwards-projecting pins 13, across the centring through holes 8 of the various outwards-projecting winglet 7 of the front hemi-shell-shaped section 5.

After placing the front hemi-shell-shaped section 5 of washing tub 1 into the receiving seat 12a of the second supporting template 12 and inserting each protrusion 13 of the second supporting template 12, i.e. each outwards-projecting pin 13 of the second supporting template 12, in pass-through manner through the centring through hole 8 of a corresponding outwards-projecting winglet 7 of the same front hemi-shell-shaped section 5, the assembly method of washing tub 1 comprises the step of moving the first and second supporting templates 11 and 12 one towards the other so as to arrange the conjugated annular coupling rims 4a and 5a of front and rear hemi-shell-shaped sections 4 and 5 of washing tub 1 locally aligned and in abutment to one another, and at same time locally substantially parallel to the vibration plane P of supporting template 12.

More in particular, after placing the front hemi-shell-shaped section 5 of washing tub 1 into the receiving seat 12a of the second supporting template 12 and inserting each protrusion or pin 13 of the second supporting template 12 in pass-through manner across the centring through hole 8 of a corresponding outwards-projecting winglet 7 of the same front hemi-shell-shaped section 5, the assembly method of washing tub 1 preferably comprises the step of moving the first and second supporting templates 11 and 12 one towards the other so as to put the annular coupling rim 5a of the front hemi-shell-shaped section 5 in abutment on the bottom of the annular groove 6 present on the conjugated annular coupling rim 4a of the rear hemi-shell-shaped section 4 of washing tub 3, preferably along the all length of the same annular groove 6.

In the example shown, in particular, after placing the front hemi-shell-shaped section 5 of washing tub 1 into the receiving seat 12a of the second supporting template 12 and inserting each protrusion or pin 13 of the second supporting template 12 in pass-through manner across the centring through hole 8 of a corresponding outwards-projecting winglet 7 of the same front hemi-shell-shaped section 5, the assembly method of washing tub 1 advantageously comprises the step of arranging the first and second supporting templates 11 and 12 substantially coaxial to one another, i.e. coaxial to a common reference axis R, with the conjugated annular coupling rims 4a and 5a of front and rear hemi-shell-shaped sections 4 and 5 locally aligned and faced to one another; and then the step of moving the first and second supporting templates 11 and 12 one towards the other in a displacement direction locally substantially parallel to the common reference axis R, so as to put the annular coupling rim 5a of the front hemi-shell-shaped section 5 in abutment on the bottom of the annular groove 6 present on the conjugated annular coupling rim 4a of the rear hemi-shell-shaped section 4.

After having arranged the annular coupling rims 4a and 5a of front and rear hemi-shell-shaped sections 4 and 5 of washing tub 1 in abutment to one another, the assembly method of washing group 1 comprises the step of pressing and vibrating for a given time the second supporting template 12 with respect to the first supporting template 11 parallel to vibration plane P, i.e. in a direction perpendicular to common reference axis R, so as to cause the local melting of both annular coupling rims 4a and 5a and the consequent reciprocal merging of front and rear hemi-shell-shaped sections 4 and 5 of washing tub 1.

With reference to Figure 10, after having completed the vibration welding of the front hemi-shell-shaped section 5 to the rear hemi-shell-shaped section 4, the assembly method of washing group 1 comprises the step of moving the first and second supporting templates 11 and 12 away to one another, so as to extract the washing tub 1 from one or both supporting templates 11 and 12 and then allow easy removal of the washing tub 1 from the assembly apparatus 10.

The washing tub 1 as disclosed above and the corresponding assembly method have lots of advantages. First of all, the combination of outwards-projecting winglet 7 on the front hemi-shell-shaped section 5 and of the pins 13 that stick out from the vibrating supporting template 12 for engaging in pass-though manner said outwards-projecting winglet 7, allows transmission of the mechanical vibrations from the vibrating supporting template 12 to the body of the front hemi-shell-shaped section 5, all around the annular coupling rim 5a of the same front hemi-shell-shaped section 5, without requiring an L-shaped annular flangewhich could limit the freedom in the design of the tub.

Last, but not less important, one or more of the outwards-projecting winglet 7 of the front hemi-shell-shaped section 5 of washing tub 1 could be additionally used as fixing members for other component parts of the laundry washing machine 100.

With reference to Figure 2, in the example shown, in particular, two outwards-projecting winglet 7 of the front hemi-shell-shaped section 5 of washing tub 1 are preferably used as fixing brackets for the coil springs 103 that connect the upper portion of washing tub 1 to the top of the outer casing 101 of the laundry washing machine 100. Furthermore other two outwards-projecting winglet 7 of the front hemi-shell-shaped section 5 of washing tub 1 are preferably used as fixing brackets for the dampers 104 that connect the bottom portion of washing tub 1 to the bottom of the outer casing 101 of the laundry washing machine 100.

Clearly, changes may be made to washing tub 1 and to the corresponding assembly method as described above without, however, departing from the scope of the present invention.

For example, the through holes 8 could be formed on the body of the various outwards-projecting winglets 7 of the front hemi-shell-shaped section 5 directly by the outwards-projecting pins 13 of supporting template 12, when the front hemi-shell-shaped section 5 is fitted into the receiving seat 12a of supporting template 12.

According to an alternative non-shown embodiment, furthermore the outwards-projecting winglets 7 of the front hemi-shell-shaped section 5 may be replaced by an outwards-protruding perimetrical flange that stick out from the main body of the front hemi-shell-shaped section 5 adjacent to the annular coupling rim 5a (i.e. adjacent to the larger annular rim 5a of the substantially funnel-shaped, front section 5 of washing tub 1).

Likewise the previous embodiment, the flange is locally substantially parallel to the reference laying plane of the annular coupling rim 5a of the front hemi-shell-shaped section 5 (i.e. to the reference laying plane of the larger annular rim 5a of the substantially funnel-shaped, front section 5), and is preferably provided with a number of centring through holes angularly spaced about the longitudinal axis L of washing tub 1.

In this alternative embodiment, therefore, the protrusions or pins 13 that stick out from the main body of the second supporting template 12 are capable of engaging in pass-through manner respective sectors of the flange of the front hemi-shell-shaped section 5 of washing tub 1.

It is clearly evident that, even if the following description is referred to the washing tub 1 of a front-loading laundry washing machine, the disclosed assembly method and assembly apparatus can be applied also to a top-loading laundry washing machine or to a top-loading laundry washing and drying machine.

In other words, washing tub 1 could be suitably shaped and structured so as to be housed inside the outer boxlike casing (not shown) of a top-loading laundry washing machine. Thus both front and rear hemi-shell-shaped sections 4 and 5 of the washing tub 1 should be substantially cylindrical- and cup-shaped, so as to form, when coupled to one another, a substantially cylindrical and barrel-shaped, rigid watertight container which preferably encloses the rotatable drum (not shown) of the laundry washing machine.

In addition, also the second supporting template could comprise a number of outwards-projecting protrusions sticking out also from the it and arranged in such a way to be inserted in pass-through manner across corresponding hold portions of the first hemi-shell-shaped section; in this case the step of placing the first hemi-shell-shaped section in the first supporting template advantageously comprises inserting a number of these outwards-projecting protrusions that stick out from the first supporting template, in pass-through manner across corresponding hold portions of the first hemi-shell-shaped section. This allows obtaining a very stable positioning of the first hemi-shell-shaped section in its first supporting template, which guarantees that during the vibration welding the first hemi-shell-shaped section is stably fixed in its first supporting template.

## Claims

1. Assembly method of the washing tub (1) of a laundry washing machine (100) wherein the washing tub (1) comprises a first hemi-shell-shaped section (4) and a second hemi-shell-shaped section (5) which are made of plastic material and are coupled to one another in watertight manner along conjugated coupling rims (4a, 5a); the assembly method of the washing tub (1) comprising the steps of:
- placing the first hemi-shell-shaped section (4) in a first supporting template (11), inside a corresponding receiving seat (11a) structured for receiving the first hemi-shell-shaped section (4) with the corresponding coupling rim (4a) faced to the outside of the same first supporting template (11);
- placing the second hemi-shell-shaped section (5) in a second supporting template (12), inside a corresponding receiving seat (12a) structured for receiving the second hemi-shell-shaped section (5) with the corresponding coupling rim (5a) faced to the outside of the same second supporting template (12);
- arranging the first (11) and second supporting templates (12) so as to put the conjugated coupling rims (4a, 5a) of the first (4) and second hemi-shell-shaped sections (5) in abutment to one another and keeping them locally substantially coplanar to a common reference laying plane (P);
- vibrating for a given time the second supporting template (12) with respect to the first supporting template (11) parallel to said common reference laying plane (P), so as to merge the second hemi-shell-shaped section (5) to the first hemi-shell-shaped section (4) via a vibration welding process;
the assembly method of the washing tub (1) **being characterized in that** the step of placing the second hemi-shell-shaped section (5) inside the receiving seat (12a) of the second supporting template (12), comprises inserting a number of outwards-projecting protrusions (13) that stick out from the second supporting template (12), in pass-through manner across corresponding hold portions (7) of the second hemi-shell-shaped section (5).

2. Assembly method according to Claim 1, **characterized in that** the hold portions (7) of the second hemi-shell-shaped section (5) comprise a number of outwards-projecting winglets (7) that jut out from the second hemi-shell-shaped section (5) adjacent to and angularly spaced around the conjugated coupling rim (5a) of the second hemi-shell-shaped section (5), or a flange that stick out from the second hemi-shell-shaped section (5) adjacent to the conjugated coupling rim (5a) of the second hemi-shell-shaped section (5).

3. Assembly method according to Claim 1 or 2, wherein the outwards-projecting protrusions (13) of the second supporting template (12) engage in pass-through manner corresponding centring through holes (8) realized on the hold portions (7) of the second hemi-shell-shaped section (5).

4. Assembly method according to Claim 1, 2 or 3, wherein the protrusions (13) of the second supporting template (12) comprise a number of outwards-protruding pins (13) that stick out from the main body of the second supporting template (12).

5. Assembly method according to any one of the preceding claims, comprising, before the step of arranging the first (4) and the second hemi-shell-shaped sections (5) of the washing tub (1) in abutment to one another, the step of inserting a rotatable drum of the laundry washing machine (100) into the first hemi-shell-shaped section (4) of the washing tub (1).

6. Assembly method according to any one of the preceding claims, wherein the conjugated coupling rim (4a) of the first hemi-shell-shaped section (4) is provided with a front annular grove (6), and the conjugated annular coupling rim (5a) of the second hemi-shell-shaped section (5) is suitably structured and dimensioned to engage/fit into said annular groove (6).

7. Assembly method according to any one of the preceding claims, wherein the first hemi-shell-shaped sections (4) is substantially cup-shaped and in that the second hemi-shell-shaped sections (4) is substantially funnel- shaped or substantially cup-shaped, so as to form, when coupled to one another, a substantially cylindrical and bell-shaped rigid watertight container.

8. Assembly apparatus (10) of the washing tub (1) of a laundry washing machine wherein the washing tub (1) comprises a first hemi-shell-shaped section (4) and a second hemi-shell-shaped section (5) which are made of plastic material and are coupled to one another in watertight manner along conjugated coupling rims (4a, 5a); the assembly apparatus (10) comprising:
- a first supporting template (11) having a receiving seat (11a) structured for receiving the first hemi-shell-shaped section (4) of the washing tub (1) with the corresponding coupling rim (4a) faced to the outside of the first supporting template (11);
- a second supporting template (12) having a receiving seat (12a) structured for receiving the second hemi-shell-shaped section (5) of the washing tub (1) with the corresponding coupling rim (5a) faced to the outside of the second supporting template (12);
- a template moving device capable of moving the first (11) and second supporting templates (12) one towards and backwards the other, so as to put the conjugated coupling rims (4a, 5a) of the first (4) and second hemi-shell-shaped sections (5) in abutment to one another, while arranging said conjugated coupling rims (4a, 5a) locally substantially coplanar to a common reference laying plane (P);
the first (11) and second supporting templates (12) being arrangeable so as to put the conjugated coupling rims (4a, 5a) of the first (4) and second hemi-shell-shaped sections (5) in abutment to one another, while arranging said conjugated coupling rims (4a, 5a) locally substantially coplanar to a common reference laying plane (P); the second supporting template (12) being capable of vibrating with respect to the first supporting template (11) parallel to said common reference laying plane (P), and the assembly apparatus (10) **being characterized in that** the second supporting template (12) is provided with a number of outwards-projecting protrusions (13) that stick out from the second supporting template (12), and are suitably spaced all around the mouth of the receiving seat (12a) of the second supporting template (12) so that each protrusion (13) is capable of engaging in pass-through manner a corresponding hold portion (7) of the second hemi-shell-shaped section (5) of the washing tub (1).

9. Assembly apparatus according to Claim 8, **characterized in that** the outwards-projecting protrusions (13) of the second supporting template (12) comprise a number of outwards-protruding pins (13) that stick out from the main body of the second supporting template (12).

10. Assembly apparatus according to Claim 8 or 9, comprising a template moving device which is capable of moving the first (11) and second supporting templates (12) one towards and backwards the other, so as to put the conjugated coupling rims (4a, 5a) of the first (4) and second hemi-shell-shaped sections (5) in abutment to one another, arranging said conjugated coupling rims (4a, 5a) locally substantially coplanar to said common reference laying plane (P).

11. Laundry washing machine (100) comprising an outer casing (101) containing a washing tub (1) which comprises a first hemi-shell-shaped section (4) and a second hemi-shell-shaped section (5) which are made of plastic material and are coupled to one another in watertight manner along conjugated coupling rims (4a, 5a); the washing machine (100) being **characterized in that** the second hemi-shell-shaped section (5) is provided with one or more hold portions (7) structured so as to be engageable in pass-through manner, during assembly of the washing tub (1), by corresponding outwards-projecting protrusions (13) that stick out from a supporting template (12) of the assembly apparatus (10) that merges the first (4) and second hemi-shell-shaped sections (5) of the washing tub (1) via a vibration welding process.

12. Washing machine according to Claim 11, wherein said one or more hold portions (7) of the second hemi-shell-shaped section (5) comprise a number of outwards-projecting winglets (7) that jut out from the second hemi-shell-shaped section (5) adjacent to and angularly spaced around the conjugated coupling rim (5a) of the second hemi-shell-shaped section (5), or a flange that stick out from the second hemi-shell-shaped section (5) adjacent to the conjugated coupling rim (5a) of the second hemi-shell-shaped section (5).

13. Washing machine according to Claim 12, wherein the outwards-projecting winglets (7) or the flange extend/s locally substantially parallel to the reference laying plane of the conjugated coupling rim (5a) of the second first hemi-shell-shaped section (5).

14. Washing machine according to Claim 11, 12 or 13, wherein said one or more hold portions (7) of the second hemi-shell-shaped section (5) is/are provided with one or more centring through holes (8) extending locally substantially perpendicular to the reference laying plane of the conjugated annular coupling rim (5a) of the second first hemi-shell-shaped section (5).

15. Washing machine according to any one of Claims 11 to 14, wherein one or more of said hold portions (7) of the second hemi-shell-shaped section (5) of the washing tub (1) serve/s as fixing bracket/s for a coil spring (103) connecting the upper portion of the washing tub (1) to the outer casing (101) of the laundry washing machine (100), and/or as fixing bracket/s for a damper (104) connecting the bottom portion of the washing tub (1) to the outer casing (101) of the laundry washing machine (100).
